# EUROPEAN PATENT APPLICATION

(11) **EP 4 596 263 A1**
(43) Date of publication of application: **06.08.2025**
(21) Application number: 24155360.1
(22) Date of filing: 01.02.2024
(51) Int. Cl.: B60D 1/30, B60D 1/62

(54) **SYSTEM AND METHOD FOR DETERMINING AN ALIGNMENT ANGLE OF TRAILER WITH RESPECT TO A SELF-PROPELLED VEHICLE**

(71) Applicant: CNH Industrial Italia S.p.A., 10156 Torino (IT)
(72) Inventor: PERASSO, Aldo, 10156 Turin (IT)
(74) Representative: CNH Industrial IP Department

(57) **Abstract**

An alignment angle indication system according to the present invention comprises
an optical sensor (20) and an indication device (22) within a field of view (26) of the optical sensor (20) and having a plurality of indication marks (28) thereon spaced apart from each other in a lateral direction (B). A control unit (24) communicatively connected to the optical sensor (20) is configured to determine an alignment angle (α) between a self-propelled vehicle (4) and a trailer (6) based on optical data, in particular image data, of the plurality of indication marks (28) captured by the optical sensor (20).

## Description

The present invention relates to a system and method for determining an alignment angle of a trailer with respect to a self-propelled vehicle towing the trailer, in particular an agricultural vehicle, such as a tractor, as well as to a combination of the self-propelled vehicle and the trailer comprising such a system.

In recent years, there has been and advance of automated and autonomous operations in agriculture to increase efficiency of these agricultural operations and to disburden human operators from fatiguing work. For example, autonomous driving of self-propelled agricultural vehicles became more and more popular. Agricultural vehicles capable of autonomous driving are known in the art and usually utilize at least a positioning system, such as GPS, a plurality of optical sensors, such as cameras, and a radar sensor. However, current systems suffer from a number of restrictions. One of these restrictions of conventional autonomous systems lies in that rearward drive operations of a self-propelled agricultural vehicle towing a trailer, such as an agricultural implement, are not feasible. Consequently, some agricultural operations cannot be performed as desired. For example, turning the agricultural vehicle and trailer on a headland, i.e., performing a so-called headland turn, is limited to turn paths which do not necessitate a rearward drive operation and thus require a larger headland size, e.g., in case of a keyhole turn, or skipping one row, e.g., in case of a U-turn. Three-point turns requiring rearward drive operations, however, are not allowed so far.

It is an object of the present invention to provide a system, a vehicle-trailer-combination, and a method capable of quickly and precisely detecting an angle and position of a trailer with respect to a self-propelled vehicle thus allowing automated rearward drive operations of the vehicle-trailer-combination.

This object is solved by the subject-matter of claims 1 and 12. Preferred embodiments are subject of the dependent claims.

According to the present invention, an alignment angle indication system for determining an alignment angle of a trailer with respect to a self-propelled vehicle towing the trailer comprises an optical sensor, in particular a camera, configured to be provided on one of the self-propelled vehicle and the trailer, an indication device configured to be provided on the other one of the self-propelled vehicle and the trailer within a field of view of the optical sensor, wherein the indication device has a plurality of indication marks spaced apart from each other at a predetermined distance at least in a lateral direction, and a control unit communicatively connected to the optical sensor and configured to determine the alignment angle of the trailer with respect to the self-propelled vehicle based on optical data, in particular image data, of the plurality of indication marks captured by the optical sensor.

In this way, an alignment angle indication system is provided which is capable of determining the alignment angle of the trailer with respect to the self-propelled vehicle in a quick and easy but also precise and reliable manner. In particular, the alignment angle can be determined in any angular position of the trailer with respect to the self-propelled vehicle without the need to calibrate the system in an initial position of the trailer to then constantly follow an indication mark. In addition, the alignment angle indication system can be implemented in a simple and cost-effective manner, since only the indication device, e.g., in form of a sign, needs to be additionally provided, whereas the optical sensor, in particular in the form of a camera, and the control unit, in particular in the form of an ECU, are usually already provided on modern agricultural vehicles. For example, the control unit may be an autonomous drive ECU provided on the tractor.

The alignment angle is preferably defined between a first longitudinal axis of the self-propelled vehicle and a second longitudinal axis of the trailer. The first longitudinal axis is aligned with the second longitudinal axis when the self-propelled vehicle moves straight in a direction of travel, the alignment angle then being about 0°. However, the first longitudinal axis and the second longitudinal axis are misaligned when the self-propelled vehicle turns, the alignment angle then being different from 0°. The alignment angle preferably lies between 0° and +/- 90°, more preferably between 0° and +/- 80° or +/- 60°. The alignment angle may also be referred to as a yaw angle of the trailer.

Herein, the term "longitudinal axis" may also be used as a placeholder for the first longitudinal axis and second longitudinal axis, respectively. This is because the optical sensor and indication device can be provided on either one of the trailer and the tractor. Consequently, if a relation of a component (such as the optical sensor or the indication device) provided on the tractor is described, the "longitudinal axis" corresponds to the first longitudinal axis. In contrast, if the component is provided on the trailer, the "longitudinal axis" corresponds to the second longitudinal axis. An example is given below.

The plurality of indication marks is preferably spaced apart from each other in equal distances. Alternatively or in addition, the plurality of indication marks is arranged symmetrically with respect to the first or second longitudinal axis. That is, the plurality of indication marks may be arranged symmetrically to the first longitudinal axis if the indication device is provided on the self-propelled vehicle, and the plurality of indication marks may be arranged symmetrically to the second longitudinal axis if the indication device is provided on the trailer.

The optical sensor is preferably provided in a fixed position, more preferably on the longitudinal axis. As a result, when viewed from the optical sensor, the plurality of indication marks appear in different distances on both sides of the longitudinal axis depending on the alignment angle, thus allowing the control unit to determine the alignment angle based on the optical data of the plurality of indication marks.

In order to increase reliability and reduce costs, the indication device preferably is an analog indication device, such as a sign, having the plurality of indication marks thereon in fixed positions. Hence, the appearance and position of the plurality of indication marks on the indication device may be invariable. In other words, the indication device is not a digital device and does not comprise a display or the like.

In a preferred embodiment, the plurality of indication marks is formed by a plurality of lines, more preferably substantially vertical lines. That is, each indication mark is one line extending in a vertical direction. In this case, the alignment angle can be determined particularly easily as will be explained in greater detail below. Preferably, the plurality of indication marks has a color different from the color of a background on which they are provided in order to increase contrast. For example, the indication marks are red on a white background. However, in alternative embodiments, the plurality of indication marks may of course have other forms as well.

The control unit is preferably configured to determine the alignment angle by estimating a spatial frequency of the plurality of indication marks via Fast Fourier Transformation (FFT). In an exemplary embodiment, in which the plurality of indication marks is symmetrically arranged and spaced apart in equal distances, a distance DL between indication marks on a left side of the indication device corresponds to a distance DR between indication marks on a right side of the indication device. Hence, a spatial frequency fL of the right side corresponds to a spatial frequency fR on the right side, wherein fL = 1/DL and fR = 1/DR. However, when the self-propelled vehicle turns with respect to the trailer, the distance DL on the left side and the distance DR on the right side appear differently to the optical sensor. For example, if the self-propelled vehicle turns left, the distance DL between indication marks on a left side of the indication device (when viewed in direction of travel) appears wider than on the right side. Consequently, the variation of the distances DL, DR between the indication marks appearing in the optical data and, therefore, the variation of spatial frequencies fL, fR are proportional to a variation of the alignment angle. Thus, the spatial frequencies fR, fL change as a function of the alignment angle. Hence, the control unit is able to determine the alignment angle from the optical data via FTT. For example, a polynomial function is used to estimate the alignment angle based on the outcome of the FTT.

In a preferred embodiment, the indication device has a first side portion and a second side portion opposite the first side portion with respect to the longitudinal axis. In a top view, the first side portion and the second side portion are each arranged at an angle with respect to the longitudinal axis. Preferably, this angle is different from 90°, more preferably between 10° and 80°, even more preferably between 30° and 60°. The plurality of indication marks is provided on the first and second side portions. When viewed from the optical sensor, the first side portion may be a left side portion and the second side portion may be a right side portion. By providing the plurality of indication marks on the first and second side portions extending at an angle with respect to the longitudinal axis, the distances DL, DR appearing to the optical sensor and thus the spatial frequencies fL, fR derived from the optical data vary more strongly as a function of the alignment angle compared to an indication device extending perpendicularly to the longitudinal axis.

In general, the indication device preferably is a single component, i.e., a one-piece or integral indication device. The indication device, however, can also comprise a plurality of separate section if needed. While the first side portion and the second side portion may therefore be separate from each other to form a multi component indication device, they are preferably connected to form an integral indication device. In a preferred embodiment, the indication device has a center portion and the first and second side portions are arranged on opposite sides of the center portion and extend from the center portion outwardly. The first and second side portions can be fixedly or releasably attached to the center portion or integrally formed with the center portion. In this way, the indication device has a particularly simple structure which can be easily manufactured, handled, and mounted on the self-propelled vehicle or the trailer.

In one embodiment, the center portion is formed by an edge on which the first side portion and the second side portion are joined together. In a top view, the indication device may thus have a V-shape or a triangular shape.

In an alternative embodiment, the center portion is a flat portion, which is preferably arranged perpendicularly to the longitudinal axis. In a top view, the indication device may thus have a \_/-shape. In this case, a reference point can also be provided on the center portion as will be described in greater detail below.

Preferably, the indication device has a first end portion adjacent to the first side portion and a second end portion adjacent to the second side portion. The first end portion and the second end portion are preferably arranged perpendicular to the longitudinal axis and, if the center portion is provided, parallel to the center portion. More preferably, the first and second end portions extend outwardly from the first and second side portion, respectively. The center portion may be arranged at a first distance from the optical sensor and the first and second end portions may be arranged at a second distance from the optical sensor different from the first distance. Preferably, the first distance is smaller than the second distance but may also be larger than the second distance.

In this way, advantageous features of the indication device as described herein can be combined in one single indication device. In particular, the indication device may generally have a three-dimensional structure, wherein a face of the indication device facing the optical sensor extends in a longitudinal direction defined by the longitudinal axis, as well as in a lateral direction (preferably horizontal) and height direction (preferably vertical) both being perpendicular to the longitudinal direction and to each other. This is particularly true for the first and second side portions extending at an angle with respect to the longitudinal axis.

In a preferred embodiment, at least two reference points are provided on the indication device, e.g., one reference point on each of the first end portion and the second end portion and, optionally, on the center portion if present. The reference points are provided in the field of view of the optical sensor, i.e., on a side of the indication device facing the optical sensor. The optical sensor is configured to capture optical data, in particular image data, of the reference points. Based on that, the control unit can easily determine even more information on the position of the trailer with respect to the self-propelled vehicle.

Preferably, the control unit is configured to determine a roll angle of the trailer with respect to the tractor about the longitudinal axis based on the optical data of the reference points captured by the optical sensor. The roll angle so determined can be used to improve reliability and accuracy of the alignment angle calculation. More particularly, deviations in spatial frequencies fL and fR resulting from of the roll angle of the trailer can be disregarded in the calculation of the alignment angle. Consequently, the roll angle can be considered without providing any further sensors or the like.

In addition, the control unit may be configured to determine a lateral shift of the trailer with respect to the tractor based on the position of the reference points. The lateral shift so determined may then be used to (re-) center the calculation of the alignment angle.

With great advantage, the reference points can also be used to self-detect an error in the calculation of the alignment angle. That is, an error may be detected if the alignment angle determined by the control unit based on the optical data of the plurality of indication marks is not in line with the lateral shift determined from the reference points. In other words, if a lateral shift resulting from the determined alignment angle deviates from the lateral shift determined from the reference points, an error is likely to have occurred. Consequently, a warning signal may be issued and/or operation of the self-propelled vehicle may be stopped. This may for example be the case if the optical sensor is obscured, e.g., by dirt and dust resulting from the field operation, if the indication device and in particular the indication marks are damaged or covered, e.g., by dirt and dust or vegetation, or if rear working lights of the self-propelled vehicle are off during night operation.

The reference points may have any appearance suitable to be precisely detected and located by the optical sensor. For example, each reference point may be in the form of a cross line or fiducial marker (also known as crash dummy sign).

In general, the present invention is applicable to any combination of a self-propelled vehicle and a trailer towed by said vehicle. Preferably, however, the self-propelled vehicle is an agricultural vehicle, in particular a tractor. For example, the tractor may be a specialty tractor for use in narrow rows, e.g., on a vineyard or orchard, where narrow turns between said rows are often necessary and can now be facilitated by the tractor-trailer combination being able to perform a three-point-turn autonomously.

Hence, the present invention also relates to a tractor-trailer-combination comprising a tractor, a trailer, and the alignment angle indication system. In particular, the tractor is equipped for autonomous driving. In this way, the tractor-trailer-combination comprising the alignment angle indication system is an autonomous system performing closed-loop autonomous driving. The trailer may be coupled to the tractor by means of a hitch assembly in a known manner. Furthermore, the trailer may be any agricultural trailer and, preferably, comprises an agricultural implement.

In a preferred embodiment, the optical sensor and, in particular in form of a camera, is mounted on the tractor and the indication device is mounted on the trailer, wherein the field of view of the optical sensor is directed rearward towards the trailer and thus towards the indication device. More preferably, the optical sensor is mounted on a cab of the tractor, in particular on a roof of the cab, and the indication device is mounted on top of the trailer. Mounting the optical sensor and the indication device in this way is particularly easy and, in many cases, tractors already comprise an optical sensor in form of a camera being mounted on the cab and directed rearwards, which can be used for the alignment angle indication system according to the present invention.

In general, the alignment angle indication system preferably comprises only the one optical sensor and only the one indication device, i.e., a single optical sensor, preferably in form of a camera, and a single indication device, preferably in form of a sign. As mentioned above, an agricultural vehicle, in particular a tractor, may already be provided with a camera directed towards the trailer which may be utilized for the alignment angle indication system. Thus, no additional optical sensors are required for the alignment angle indication system resulting in a simple and cost-effective design of the system. With great advantage, the alignment angle can be determined based on optical data of only one indication device captured by only one optical sensor no matter whether the tractor-trailer-combination turns left or right. Moreover, the combination only the one indication device and the one optical sensor is sufficient to determine all relevant position data of the trailer without the need for additional sensors.

As regards the optical sensor of the alignment angle indication system, its field of view is directed towards the indication device and, preferably, does not overlap with a field of view of any other optical sensor provided on the tractor and/or trailer. In other words, the tractor-trailer-combination does not require two or more optical sensor directed in substantially the same direction.

Finally, the optical sensor of the alignment angle indication system may have a different configuration compared to any other optical sensor of the tractor-trailer-combination. For example, the optical sensor may be color camera or a monocolor camera.

The present invention further relates to a method for determining an alignment angle of a trailer with respect to a self-propelled vehicle towing the trailer, wherein one of the self-propelled vehicle and the trailer is provided with an optical sensor and the other one of the self-propelled vehicle and trailer is provided with an indication device arranged in a field of view of the optical sensor and having the plurality of indication marks thereon spaced apart from each other in the lateral direction. The method comprises the steps of:
capturing, by means of the optical sensor, optical data of the plurality of indication marks; and
determining, by means of the control unit, an alignment angle of the trailer with respect to the self-propelled vehicle based on the optical data of the plurality of indication marks captured by the optical sensor.
In this way, a simple and reliable method for quickly determining the alignment angle is provided.

Preferably, the method is carried out by the alignment angle indication system and, in particular, by the tractor-trailer-combination described herein. Consequently, all features described with respect to the alignment angle indication system and the tractor-trailer-combination described herein are applicable to the method and vice versa. Notably, all functions of the alignment angle indication system may also be considered as steps of the method.

Preferably, the step of determining the alignment angle comprises estimating a spatial frequency of the plurality of indication marks via Fast Fourier Transformation (FTT) and determining the alignment angle based on the spatial frequency of the plurality of indication marks. The spatial frequency may comprise spatial frequencies fL and fR described above.

In order to derive even more information about the trailer's position, the method may further comprise the step of determining, by means of the control unit, a roll angle of the trailer with respect to the self-propelled vehicle about the longitudinal axis based on optical data of at least two reference points captured by the optical sensor. The at least two reference points are provided on the indication device, in particular on the first end portion and the second end portion as well as optionally on the center portion as described above. Further, the accuracy of the determination of the alignment angle by means of the control unit can be improved by considering a deviation of the spatial frequency resulting from the roll angle when determining the alignment angle.

Finally, error detection can be implemented by the method comprising the steps of:
determining, by means of the control unit, a lateral shift of the trailer with respect to the self-propelled vehicle based on the optical data of the reference points captured by the optical sensor;
determining, by means of the control unit, if the lateral shift of the trailer determined by the control unit corresponds to a lateral shift resulting from the alignment angle determined by the control unit; and, if a deviation is detected,
issuing a warning signal and/or stopping operation of the tractor-trailer-combination.

Features and advantages of the present invention will now be described under reference to the accompanying drawings.
- Fig. 1: is a top view of a tractor-trailer-combination equipped with an alignment angle indication system according to the present invention.
- Figs. 2a, 2b, 2c: are top views of the tractor-trailer-combination of fig. 1 with the trailer being positioned in different angular positions of an alignment angle between the tractor and the trailer.
- Figs. 3a, 3b, 3c: are front views of an indication device of the alignment angle indica-tion system as viewed from an optical sensor of the alignment angle indication system in different angular positions of the trailer with re-spect to the tractor according to figs. 2a, 2b, 2c.
- Figs. 4a, 4b, 4c: are top views of different embodiments of an indication device of the alignment angle indication system according to the present inven-tion.
- Figs. 5a, 5b, 5c: are front views of the indication device of the tractor-trailer-combina-tion in different angular positions of a roll angle between the tractor and the trailer.

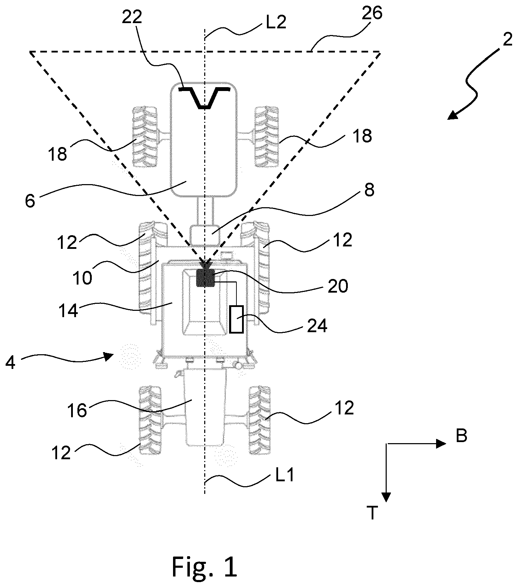

In figure 1, a tractor-trailer-combination 2 is shown in a top view. Although the invention will be described on the basis of the tractor-trailer-combination 2, it is not limited to this specific embodiment and structure of the tractor-trailer-combination 2 but is generally applicable to any combination of a self-propelled vehicle and a trailer.

The tractor-trailer-combination 2 comprises a tractor 4 and a trailer 6 towed by the tractor 4 and preferably coupled to the tractor 4 by means of a hitch assembly 8. The tractor 4 is a common tractor, e.g., a specialty tractor, comprising a chassis 10 supported by four ground engaging wheels 12 and carrying a cab 14 and an engine covered by a hood 16. The cab 14 usually accommodates a human operator controlling the tractor 4 and the trailer 6 by means of a number of control devices provided in the cab 14. Of course, in case of an autonomously driving tractor, the operator does not necessarily have to be present in the cab 14 and the cab 14 may even be omitted.

Preferably, the trailer 6 is an agricultural trailer which may comprise at least one agricultural implement, such as ground engaging tillage tools, harvesting tools, cutter bars or blades, hay and forage equipment, seeding or planting equipment, spraying equipment etc.. The trailer 6 is usually supported by at least two ground engaging wheels 18.

The tractor 4 has a first longitudinal axis L1 extending parallel to a direction of travel T of the tractor 4 and preferably through a center of the tractor 4. The trailer 6 has a second longitudinal axis L2 extending parallel to the direction of travel T of the trailer 6 and preferably through a center of the trailer 6. As long as the tractor 4 and the trailer 6 move straight into the direction of travel T, the first and second longitudinal axis L1, L2 are aligned with each other, as shown in figure 1, and therefore are also referred to as a longitudinal axis L.

The tractor-trailer-combination 2 is provided with an alignment angle indication system according to the present invention. The alignment angle indication system comprises an optical sensor 20, preferably formed by a camera, an indication device 22, preferably formed by a single sign, and a control unit 24 communicatively coupled to the optical sensor 20. In a preferred embodiment shown in the figures, the optical sensor 20 is provided on the tractor 4, in particular on the cab 14 of the tractor 4, and the indication device 22 is provided on top of the trailer 6 within a field of view 26 of the optical sensor 20. Here, the field of view 26 is directed rearwards from the tractor 4 towards the trailer 6. In general, the optical sensor 20 is preferably configured such that the indication device 22 is arranged within the field of view 26 in substantially all operating conditions of the tractor-trailer-combination 2. In a top view, the optical sensor 20 is preferably positioned on the first longitudinal axis L1 and the indication device 22 is preferably positioned symmetrically with respect to the second longitudinal axis L2.

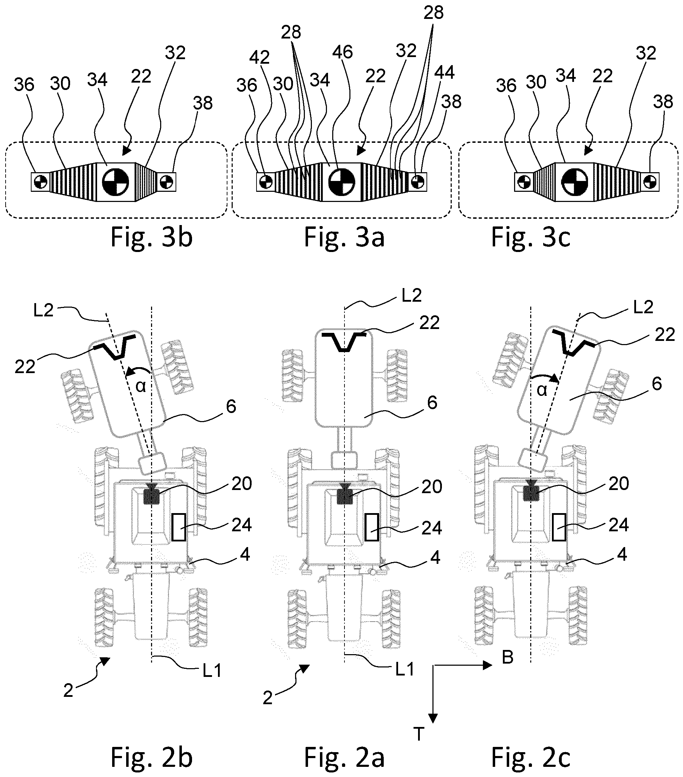

Referring now to figure 2, the tractor-trailer-combination 2 of figure 1 is shown in different angular positions of the trailer 6 with respect to the tractor 4. In figure 2a, the tractor-trailer-combination 2 is moving straight with respect to the direction of travel T, the first longitudinal axis L1 and the second longitudinal axis L2 therefore being parallel. In fig-ure 2b, the tractor-trailer-combination 2 makes a right turn with respect to the direction of travel T and, in figure 2c, the tractor-trailer-combination 2 makes a left turn with respect to the direction of travel T. Consequently, an alignment angle α occurs between the tractor 4 and the trailer 6, more precisely between the first longitudinal axis L1 and the second longitudinal axis L2. It is apparent that the alignment angle α depends on the (mis-) alignment of the trailer 6 with respect to the tractor 4 and usually varies between +/- 60°. For example, the alignment angle α is +20° in fig. 2b and -20° in fig. 2c.

The alignment angle indication system is provided to determine the alignment angle α during operation of the tractor-trailer-combination 2 as reliably and precisely as possible, as will now be described. In order to do so, a front view of the indication device 22 as viewed from the optical sensor 20 is shown in figure 3, wherein the view shown in figure 3a corresponds to the arrangement of figure 2a, the view shown in figure 3b corresponds to the arrangement of figure 2b, and the view shown in figure 3c corresponds to the arrangement of figure 2c.

As can be seen in figures 3a, 3b, 3c, the indication device 22 has a plurality of indication marks 28 thereon which are spaced apart from each other at a predetermined distance in a lateral direction perpendicular to the longitudinal axis L. The indication device 22 is formed and positioned in a way allowing the optical sensor 20 to capture image data of the plurality of indication marks 28. In a preferred embodiment, each of the plurality of indication marks 28 is formed by a vertical line, the lines being parallel to each other. Due to the perspective of the optical sensor 20, the distance between the plurality of indication marks 28 parallel to the lateral direction changes as a function of the alignment angle α. Of course, the distance does not really change but only in a projection into a two-dimensional plane as viewed from the optical sensor 20 capturing image data.

To increase this effect, the indication device 22 preferably comprises a first side portion 30 and a second side portion 32 opposite the first side portion, wherein the first side portion and the second side portion are arranged at an angle with respect to the second longitudinal axis L2. The plurality of indication marks 28 is provided on the first side portion 30 and the second side portion 32. It can be seen from inter alia figure 3b that, in a right turn, the distance between the plurality of indication marks 28 on the first side portion 30 of the indication device 22 appears to be larger than in figure 3a, whereas the distance between the plurality of indication marks 28 on the second side portion 32 appears to be smaller than in figure 3a. The same is true the other way around for a left turn shown in figure 3c.

The control unit 24 is configured to determine the alignment angle α of the trailer 6 with respect to the tractor 4 based on optical data, in particular image data, of the plurality of indication marks 28 captured by the optical sensor 20. More particularly, a spatial frequency f of the plurality of indication marks 28 can be estimated via Fast Fourier Transformation, wherein the spatial frequency f changes as a function of the alignment angle α.

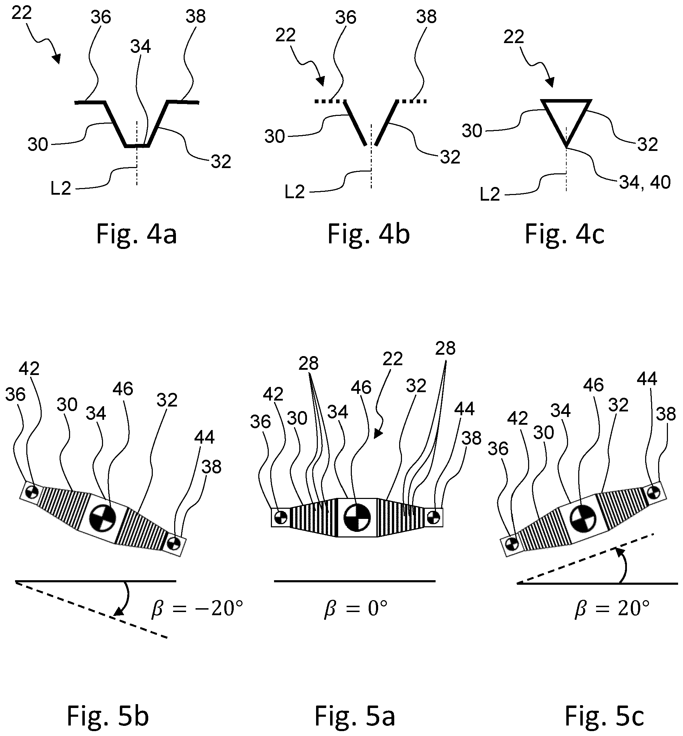

While it may generally be sufficient for the indication device 22 to be formed by a completely flat sign arranged perpendicularly to the longitudinal axis L, the alignment angle indication system may be improved by giving the indication device 22 a certain shape. Different shapes of the indication device 22 will now be described referring to figure 4.

In figure 4a, the indication device 22 also shown in figures 1 to 3 and 5 is depicted in greater detail in a top view. The indication device 22 comprises the first side portion 30 and the second side portion 32 inclined with respect to the longitudinal axis L. In addition, the indication device 22 may have a center portion 34 connecting the first and second side portions 30, 32, which extent outwardly on opposite sides from the center portion 34. Preferably, the center portion 34 is perpendicular to the longitudinal axis L. Moreover, the indication device 22 may have a first end portion 36 adjacent to the first side portion 30 and a second end portion 38 adjacent to the second side portion 32. The first and second end portions 36, 38 may extend outwardly from the first side portion 30 and the second side portion 32, respectively. Preferably, the first and second end portions 36, 38 are perpendicular to the longitudinal axis L and thus, if present, parallel to the center portion 34.

The center portion 34 may be arranged at a first distance from the optical sensor 20. The first and second end portions 36, 38 may be arranged in one plane at a second distance from the optical sensor 20 different from the first distance. In the embodiment shown, the first distance is smaller than the second distance. This also results in an inclination of the first and second side portions 30, 32 mentioned above.

As can be seen in figure 4b, the indication device 22 may comprise two or more separate sections not connected to each other. Consequently, the first side portion 30 and in the second side portion 32 may be separated from each other and the center portion 34 may therefore be omitted. As indicated by the dotted lines in figure 4b, the first and second end portions 36, 38 may also be provided but can be omitted, if desired. Still, the first and second side portions 30, 32 are preferably arranged at an angle with respect to the longitudinal axis L.

Another embodiment of the indication device 22 is shown in figure 4c. In this case, the first and second side portions 32, 34 are connected along an edge 40 forming the center portion 34 in this embodiment. The first and second side portions 32, 34 may or may not be connected by a rear wall as shown in figure 4c. The indication device 22 according to figure 4c may also have end portions as described with respect to figure 4a, if desired.

Referring now to figures 3 and 5, a reference point 42, 44, 46 may be provided on each of the first end portion 36, the second end portion 38, and optionally the center portion 34, if present. Namely, a first reference point 42 is then provided on the first end portion 36, a second reference point 44 is provided on the second end portion 38, and a center reference point 46 is provided on the center portion 34. As shown, the reference points may have the form of a fiducial marker to precisely detect their position.

By capturing optical data of the reference points 42, 44, 46 by means of the optical sensor 20, the control unit 24 is enabled to determine a position of the reference points 42, 44, 46 based on this optical data. Additional information can be derived from the position of the reference points 42, 44, 46 as follows.

For example, when the trailer 6 tilts about the second longitudinal axis L2, the indication device 22 having the reference points 42, 44, 46 thereon tilts accordingly. Consequently, the control unit 24 may be configured to determine a roll angle β of the trailer 6 with respect to the tractor 4 about the longitudinal axis L as shown in figure 5. Not only can the roll angle β be used as input for autonomous driving operations, but also to improve the alignment angle α calculation described above. That is because deviations in spatial frequencies resulting from the roll angle β of the trailer 6 with respect to the tractor 4 can be disregarded in the calculation of the alignment angle α.

In addition, errors in the alignment angle calculation based on the plurality of indication marks 28 can be detected by the control unit 24. The position of the reference points 42, 44, 46 corresponds to a lateral shift of the trailer 6 with respect to the tractor 4 and, thus, this lateral shift can be determined by the control unit 24 based on the optical data of the reference points 42, 44, 46. The control unit 24 may then determine whether the determined lateral shift corresponds to the calculated alignment angle α or not. If a deviation is determined, a warning signal may be issued and the operation of the tractor-trailer-combination 2 can be stopped.

It is apparent from the description provided above that an alignment angle indication system and method are provided which allow for a precise and reliable determination of the position of the trailer 6 with respect to the self-propelled vehicle 4. Consequently, automated or even autonomous rearward driving operations of the vehicle-trailer-combination become possible without involving significant efforts. Further embodiments within the scope of the invention defined by the appending claims are apparent to the person skilled in the art based on the examples described herein.

## Claims

1. An alignment angle indication system for determining an alignment angle (α) of a trailer (6) with respect to a self-propelled vehicle (4) towing the trailer (6), the alignment angle indication system comprising:
an optical sensor (20), in particular a camera, configured to be provided on one of the self-propelled vehicle (4) and the trailer (6);
an indication device (22) configured to be provided on the other one of the self-propelled vehicle (4) and the trailer (6) within a field of view (26) of the optical sensor (20), wherein the indication device (22) has a plurality of indication marks (28) spaced apart from each other at a predetermined distance at least in a lateral direction (B); and
a control unit (24) communicatively connected to the optical sensor (20) and configured to determine the alignment angle (α) of the trailer (6) with respect to the self-propelled vehicle (4) based on optical data, in particular image data, of the plurality of indication marks (28) captured by the optical sensor (20).

2. The alignment angle indication system according to claim 1, **characterized in that** the plurality of indication marks (28) is formed by a plurality of vertical lines.

3. The alignment angle indication system according to claim 1 or 2, **characterized in that** the control unit (24) is configured to determine the alignment angle (α) by estimating a spatial frequency (fL, fR) of the plurality of indication marks (28) via Fast Fourier Transformation.

4. The alignment angle indication system according any of claims 1 to 3, **characterized in that** the indication device (22) has a first side portion (30) and a second side portion (32) opposite the first side portion (30) with respect to a longitudinal axis (L), the first side portion (30) and the second side portion (32) each being arranged at an angle with respect to the longitudinal axis (L), this angle being different from 90°, preferably between 10° and 80°, more preferably between 30° and 60°, and wherein the plurality of indication marks (28) is provided on the first and second side portions (30, 32).

5. The alignment angle indication system according to claim 4, **characterized in that** the indication device (22) further has a first end portion (36) adjacent to the first side portion (30) and a second end portion (38) adjacent to the second side portion (32), and a reference point (42, 44) is provided on each of the first end portion (36) and the second end portion (38); and
the control unit (24) is configured to determine a roll angle (β) of the trailer (6) with respect to the self-propelled vehicle (4) about the longitudinal axis (L) based on optical data of the reference points (42, 44) captured by the optical sensor (20).

6. The alignment angle indication system nation according to claim 5, **characterized in that** the indication device (22) further has a center portion (34), wherein the first and second side portions (30, 32) are arranged on opposite sides of the center portion (34) and extend from the center portion (34), wherein the center portion (34), the first end portion (36) and the second end portion (38) are arranged parallel to each other and to a plane perpendicular to the longitudinal axis (L).

7. The alignment angle indication system according to any one of the preceding claims, **characterized in that** the optical sensor (20) is arranged in a fixed position on the longitudinal axis (L) and the indication device (22) is formed symmetrically with respect to the longitudinal axis (L).

8. The alignment angle indication system according to any one of the preceding claims, **characterized in that** the alignment angle indication system comprises only the one optical sensor (20) and only the one indication device (22), wherein the indication device (22) is formed by a single component.

9. A tractor-trailer-combination (2) comprising a self-propelled vehicle in the form of a tractor (4), a trailer (6) towed by the tractor (4), and an alignment angle indication system according to any of the preceding claims.

10. The tractor-trailer-combination (2) according to claim 9, **characterized in that** the optical sensor (20) is mounted on the tractor (4) and the indication device (22) is mounted on the trailer (6), wherein the field of view (26) of the optical sensor (20) is directed rearwards towards the trailer (6).

11. The tractor-trailer-combination (2) according to claim 10, **characterized in that** the optical sensor (20) is mounted on a cab (14) of the tractor (4), in particular on a roof of the cab (14), and the indication device (22) is mounted on top of the trailer (6).

12. A method for determining an alignment angle (α) of a trailer (6) with respect to a self-propelled vehicle (4) towing the trailer (6) , wherein one of the self-propelled vehicle (4) and the trailer (6) is provided with an optical sensor (20) and the other one of the self-propelled vehicle (4) and the trailer (6) is provided with an indication device (22) arranged in a field of view (26) of the optical sensor (20) and having a plurality of indication marks (28) thereon spaced apart from each other in a lateral direction (B), the method comprising the steps of:
capturing, by means of the optical sensor (20), optical data of the plurality of indication marks (28); and
determining, by means of a control unit (24), an alignment angle (α) of the trailer (6) with respect to the self-propelled vehicle (4) based on the optical data of the plurality of indication marks (28) captured by the optical sensor (20).

13. The method according to claim 12, **characterized in that** the step of determining the alignment angle (α) comprises estimating a spatial frequency (fL, fR) of the plurality of indication marks (28) via Fast Fourier Transformation and determining the alignment angle (α) based on the spatial frequency (fL, fR) of the plurality of indication marks (28).

14. The method according to claim 12 or 13, **characterized in that** the method further comprises the step of:
determining, by means of the control unit (24), a roll angle (β) of the trailer (6) with respect to the self-propelled vehicle (4) about the longitudinal axis (L) based on optical data of at least two reference points (42, 44) captured by the optical sensor (20), the at least two reference points (42, 44) being provided on the indication device (22).

15. The method according to claim 14, **characterized in that** the method further comprising the steps of:
determining, by means of the control unit (24), a lateral shift of the trailer (6) with respect to the self-propelled vehicle (4) based on the optical data of the at least two reference points (42, 44) captured by the optical sensor (20);
determining, by means of the control unit (24), if the lateral shift of the trailer (6) determined by the control unit (24) corresponds to a lateral shift resulting from the alignment angle (α) determined by the control unit (24), and, if a deviation is detected,
issuing a warning signal and/or stopping operation of the tractor (4).
